# EUROPEAN PATENT SPECIFICATION

(11) **EP 2 906 033 B1**
(45) Date of publication and mention of the grant of the patent: **27.01.2021**
(21) Application number: 13776450.2
(22) Date of filing: 08.10.2013
(51) Int. Cl.: A01G 22/15, A01G 18/64, A01G 9/029

(54) **METHOD OF GROWING VEGETABLES, MUSHROOMS OR HERBS IN A BOX**
VERFAHREN ZUR ANZUCHT VON GEMÜSE, PILZE ODER KRÄUTER IN EINER SCHACHTEL
PROCÉDÉ DE CROISSANCE DE LÉGUMES, CHAMPIGNONS OU HERBES EN BOÎTE

(30) Priority: 11.10.2012 EP 12188114
(43) Date of publication of application: 19.08.2015
(73) Proprietor: Rijk Zwaan Zaadteelt en Zaadhandel B.V., 2678 KX De Lier (NL)
(72) Inventor: VOERMANS, Wilhelmus Petrus Adrianus Roeland, 4871 KR Etten-Leur (NL); VAN DER LAKEN, Jeanette Diana, 2825 AJ Berkenwoude (NL); ZWAAN, Michiel Anton, 3155 VR Maasland (NL); CELIS, Marc Alfons Constant, 2500 Lier (BE)
(74) Representative: van Someren, Petronella F. H. M.
(86) International application number: PCT/EP2013/070879
(87) International publication number: WO 2014/056869

(56) References cited:
- EP-A1- 0 645 078
- WO-A1-2013/154424
- WO-A2-00/23331
- CN-A- 1 589 600
- DE-A1- 3 218 532
- FR-A1- 2 734 988
- US-A- 3 242 614
- US-A- 4 852 297
- US-A- 5 171 683
- US-A1- 2005 035 016

## Description

The present invention relates to a method for producing consumer-ready vegetables, mushrooms or herbs.

Vegetables, mushrooms and herbs are traditionally produced by specialized growers in greenhouses or on fields. After harvest, the produce needs to be transported to a retail outlet. The transportation costs have an impact on the final consumer price. Moreover, it is sometimes necessary to store the produce before they are distributed. For certain products this may require specialized storage facilities. A method of growing plants in a container and transferring them to a retail store in said container is known from EP0302071 B1.

It is therefore an object of the invention to provide a new way of producing vegetables, herbs and mushrooms that leads to lower costs and a fresher product.

The vegetable supply chain comprises parties that are involved directly or indirectly in fulfilling a customer request. The vegetable supply chain may include but is not limited to, seed breeders, seed suppliers, growers, transporters, warehouses, retailers and the consumers themselves. By improving the efficiency at several steps in the supply chain, the end consumer will not only have a fresher product, but the costs involved at various steps of the supply chain may be reduced. Therefore it is also an object of the invention to provide a solution for improving the efficiency of the vegetable supply chain, and thereby reducing costs of vegetable production.

The present invention thus provides a method for producing consumer-ready vegetables, mushrooms or herbs, comprising the steps of:
a) culturing vegetables, mushrooms or herbs in a closed container under suitable growing conditions until maturity; and
b) transferring the container with the mature vegetable, mushrooms or herb to a retail outlet,
wherein the container is provided with a label or wrap (13) with information regarding the vegetable, mushrooms or herb.

In a preferred embodiment, culturing of the vegetables, mushrooms or herbs until maturity takes place in, or in the vicinity of, the retail outlet. Suitably the products are cultured in storage rooms or basements of the retail outlet. This way the transportation costs are saved. Moreover, the products need not be stored between harvest and transport to their point of sale and are therefore more fresh. The retail outlet is suitably a supermarket, but other types of stores can be envisaged as well.

It is not necessary for the method of the invention to be performed in the retail outlet itself. It is also possible that the products are grown in regional facilities to supply multiple retail outlets in the area, thus still having part of the benefit of lower transportation costs.

The growth facilities are preferably provided with specialized lighting systems designed to provide the correct light intensity and colour, in particular, well known assimilation lighting. Such systems may be automatically controlled to allow for a light and darkness cycle that is particularly adapted to the type of vegetable or herb.

Prior to culturing the vegetables, mushrooms or herbs, seed for the vegetable or herb or spores for the mushrooms is placed on or in a substrate in the container and the container is closed. Alternatively, a germinated seed, seedling or plantlet of the vegetable or herb or mycelium for the mushrooms is placed on or in the substrate in the container before closing it.

In one embodiment, the substrate is placed in the container as part of the method. In an alternative embodiment, the container is already provided with the substrate. In a further embodiment, the seeds, spores, seedlings, plantlets or mycelium are also included and the container is already closed.

In order to germinate, the seeds or spores need to be in contact with a fluid, such as water or a buffer. Suitably, closing the container is done after introducing the fluid into the container. Since the container remains unopened before the product is ready to be consumed, all nutrients and fluids needed to obtain a mature product are to be included in the container before closure thereof.

Suitably, the container is closed with a permeable membrane. The membrane is permeable to oxygen (O₂) and carbon dioxide (CO₂) but preferably impermeable to contaminations and pathogens, like viruses, bacteria, fungi, protists or insects. The products thus grow in a contamination- and pathogen-free environment. The resistance requirements for the products are much lower than for growing in a greenhouse or on the field. Each plant or mushrooms is individually packed and cannot contaminate other plants or be contaminated. The retailer can thus use seeds that comprise fewer resistances which as a consequence of the lower development costs is more cost-effective.

After sowing the seeds or spores, or planting the germinated seeds, seedlings, plantlets or mycelium, the container is closed with the membrane to be re-opened only by the consumer after the product is sold. Thus, the product itself does not require handling and remains much more hygienic.

The method of the invention is particularly suitable for leafy vegetables, in particular, lettuce, endive, rucola, lamb lettuce, corn salad, chard, leaf beet, spinach, radish. The vegetables can also be sprout vegetables, such as cress, beet sprouts, alfalfa, broccoli sprouts, bean sprouts, fennel sprouts, cabbage sprouts, garlic sprouts, leek sprouts, pea sprouts, chickpea sprouts, radish sprouts.

The lettuce is for example, leaf lettuce, head lettuce or baby leaf lettuce. For baby leaf lettuce, different lettuce varieties can be used to obtain an attractive mixture. In one embodiment, two or more lettuce seeds of different varieties are used to obtain a mix of different leaf or head lettuce plants.

The herbs are for example selected from chives, parsley, basil, dill, coriander, cilantro, mint, oregano, rosemary, thyme, marjoram, lemon balm, tarragon, sage. In a particular embodiment, mixtures of herbs can be produced such as an Italian herb mix or French herb mix.

Mixtures of mushrooms can also be made by using different spores. The method can also be used for obtaining one large mushroom, such as a Portobello mushroom.

In a particular embodiment, the seeds can be provided in the form of a seed mat, seed band or any other form. This is especially practical for mixtures of vegetables or herbs so that the correct seed distance is automatically obtained upon placing the mat on the substrate.

The substrate suitably comprises nutrients for the vegetables, mushrooms or herbs. For each type of product a corresponding substrate can then be designed wherein the suitable amount of nutrients is contained. It is furthermore possible to include the nutrients in the fluid that is to be added to the substrate. The substrate and fluid together may have the form of a gel in which the plant or mushroom can grow.

The container is thus provided with a label with information regarding the vegetable, mushrooms or herb. The information comprises for example, the name of the vegetable, nutritional fact, best before date and the price. In addition to such sales information, other information, such as recipes, can be included as well. The container may also be provided with a paper wrap that contains such information.

The label or wrap can be applied prior to or immediately after closing the container. Alternatively, the label or wrap is applied directly before transfer to the retail outlet. When applying the label or wrap, care should be taken that the upper side of the container is not so covered that entrance of light into the container is hampered.

Further disclosed herein is a set for producing consumer-ready vegetables, mushrooms or herbs, comprising a container, a substrate, sowing or planting material, and a permeable membrane.

Both with respect to the method and the set, the size and form of the container preferably correspond with the size and form of the mature vegetable, or herb or the quantity of mushrooms to be produced. The container can also have any other form as well.

Suitably, the closing membrane is at least partially self-adhesive, in particular at the edges. The membrane can then be easily stuck to the open side of the container to seal it off.

In one embodiment of the set, the substrates and seeds are already placed in the container, and the container is already closed with the membrane. In this embodiment no moisture should be present in the container because that might lead to premature germination. In order to introduce the fluid, the container is then provided with means to allow the fluid to enter the container. Such means are for example, valve means that avoid entrance of contaminants and pathogens.

Also discloser herein is a container comprising a vegetable, mushrooms or herb, obtainable by the method as claimed. The container is suitably adapted to the form of the product. It can be a square box, a rectangular box or a tube, or any other form.

The invention can be performed without the contribution of the grower. The retailer can buy his seed directly from seed companies. Since one step in the vegetable supply chain is now no longer necessary, the retailer can produce his own vegetables, mushrooms and herbs at a significantly lower cost.

The present invention will further be illustrated in the figures that follow. In the figures, like reference numerals refer to the same or corresponding parts.
**Figure 1** shows how the substrate and the seed is placed in the still open container. A) is a square box for one lettuce plant. B) is a tube for herbs. C) is a rectangular box for baby leaf lettuce.
**Figure 2** shows the closed boxes with the growing plants corresponding with **Figure 1****.**
**Figure 3** shows a growing facility with a number of boxes.
**Figure 4** shows the boxes with the mature plants corresponding with **Figure 1****.**
**Figure 5** shows the boxes when labelled and placed in the supermarket.

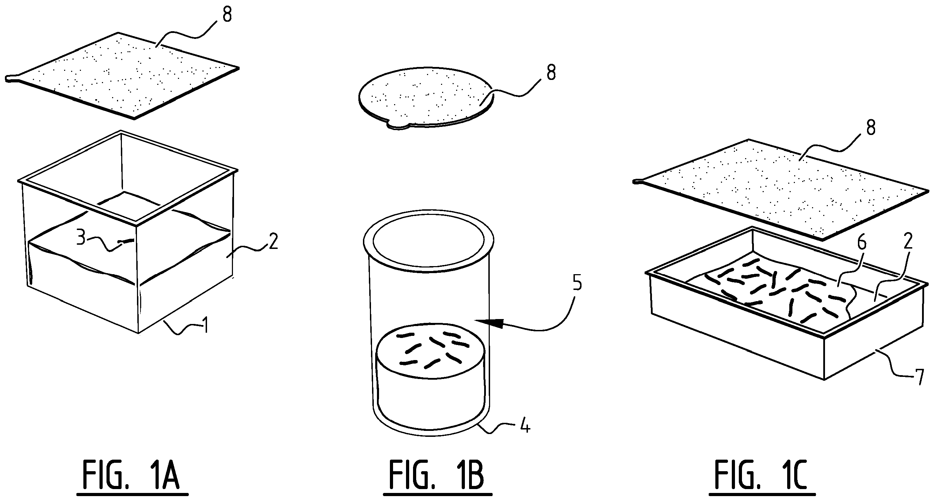

**Figure 1A** shows a square box 1 with a substrate 2 on which one seed 3 is placed. In **Figure 1B** a tube 4 is shown that comprises multiple seeds 5 for growing chives. In **Figure 1C** a seed mat 6 comprising a mixture of lettuce seed is placed on the substrate 2 in a rectangular container 7.

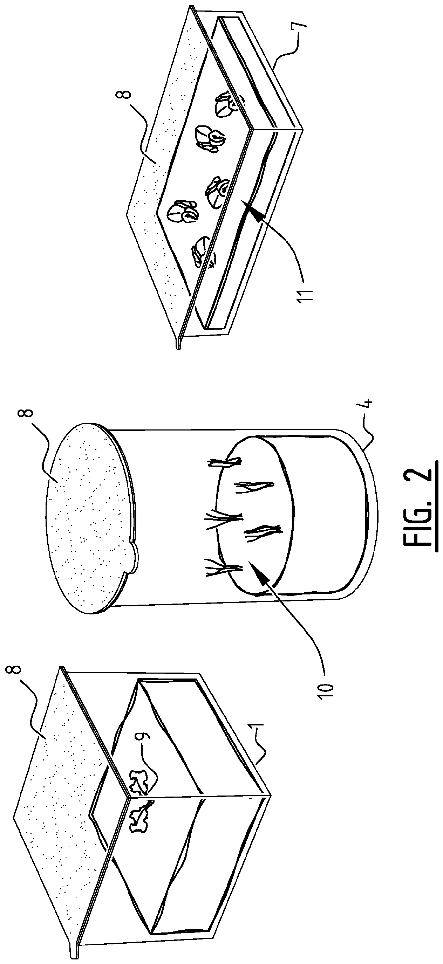

After sowing, water is introduced in the containers 1, 4 and 7, after which they are closed with a permeable membrane 8 that is stuck to the edges of the upper end of the containers. The boxes 1, 4 and 7 are then subjected to a growing regime adapted to the product to be grown. The seeds will germinate and plantlets 9, 10 and 11 are visible in **Figure 2****.**

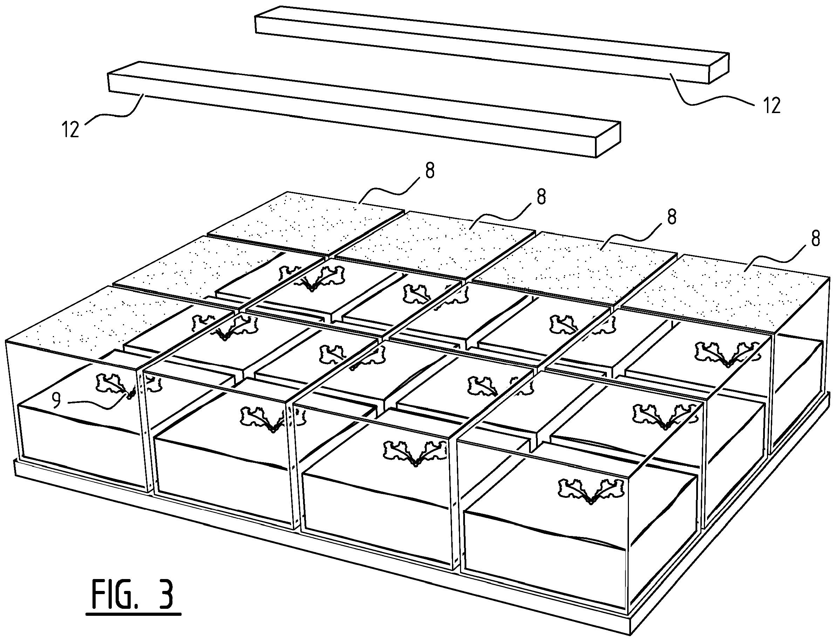

**Figure 3** shows how lettuce heads are grown in individual boxes that are sealed with a permeable membrane 8 in the basement of a supermarket. Assimilation lightning 12 is installed to provide the plants with the correct light.

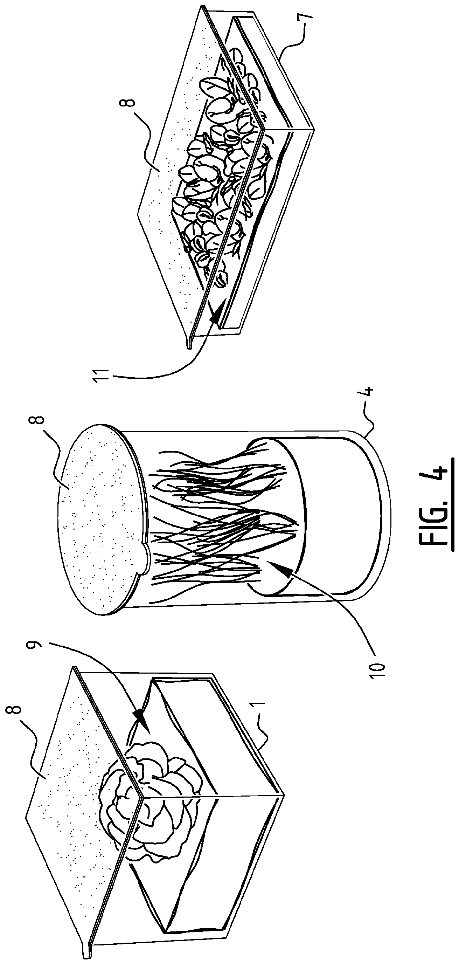

In **Figure 4** the mature products are shown. The boxes 1 and 7 contain a mature lettuce head 9 and the baby lettuce plants 11, respectively. In box 4 a chives plant 10 is visible.

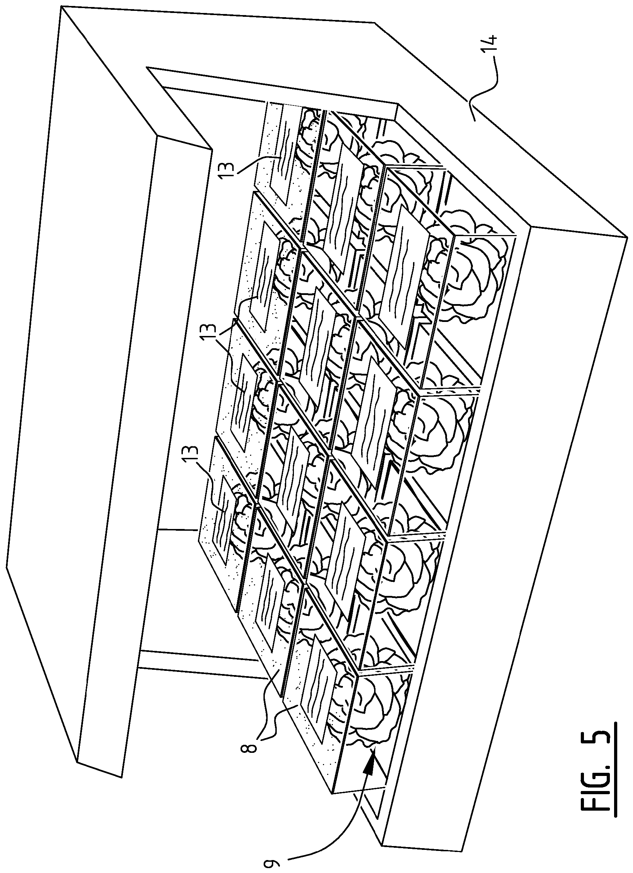

**Figure 5** shows how a head of lettuce 9 grown in a closed container 8 after being provided with a label 13 can be presented in a display or cooling unit 14 in a supermarket.

## Claims

1. Method for producing consumer-ready vegetables, mushrooms or herbs, comprising the steps of:
a) culturing vegetables, mushrooms or herbs in a closed container (1, 4, 7) under suitable growing conditions until maturity; and
b) transferring the container (1, 4, 7) with the mature vegetable (9), mushrooms or herb to a retail outlet
wherein the container is provided with a label or wrap (13) with information regarding the vegetable, mushrooms or herb.

2. Method as claimed in claim 1, wherein culturing of the vegetables, mushrooms or herbs until maturity takes place in or in the vicinity of the retail outlet.

3. Method as claimed in claim 1 or 2, wherein the container is closed with a permeable membrane (8).

4. Method as claimed in claim 3, wherein the membrane (8) is permeable to oxygen (O₂) and carbon dioxide (CO₂) but preferably impermeable to contaminations and pathogens, such as viruses, bacteria, fungi, protists or insects.

5. Method as claimed in any one of the claims 1-4, wherein prior to culturing the vegetables, mushrooms or herbs, a seed (3, 5), germinated seed, seedling or small plant for the vegetable or herb or mycelium for the mushrooms is placed on or in a substrate (2) in the container (1, 5, 7) and the container is closed.

6. Method as claimed in any one of the claims 1-5, wherein the vegetables are leafy vegetables, in particular lettuce, in particular leaf lettuce, head lettuce or baby leaf lettuce, endive, rucola, lamb lettuce, corn salad, chard, leaf beet, spinach, radish, sprout vegetables, in particular, cress, beet sprouts, alfalfa, broccoli sprouts, bean sprouts, fennel sprouts, cabbage sprouts, garlic sprouts, leek sprouts, pea sprouts, chickpea sprouts, or wherein the herbs are selected from chives, parsley, basil, dill weed, coriander, cilantro, mint, oregano, rosemary, thyme, marjoram, lemon balm.

7. Method as claimed in any one of the claims 1-6, wherein the seeds are provided in the form of a seed mat or seed band (6).

8. Method as claimed in any one of the claims 1-7, wherein the substrate (2) comprises nutrients for the vegetables, mushrooms or herbs.

## Patentansprüche

1. Verfahren zur Herstellung von verzehrfertigem Gemüse, Pilzen oder Kräutern,
aufweisend die folgenden Schritte:
a) Kultivieren von Gemüse, Pilzen oder Kräutern bis zur Reife in einem geschlossenen Behälter (1, 4, 7) unter geeigneten Wachstumsbedingungen; und
b) Übergeben des Behälters (1, 4, 7) mit dem reifen Gemüse (9), den Pilzen oder den Kräutern an eine Verkaufsstelle,
wobei der Behälter ein Etikett oder eine Hülle (13) mit Informationen über das Gemüse, die Pilze oder die Kräuter aufweist.

2. Verfahren nach Anspruch 1, wobei das Kultivieren des Gemüses, der Pilze oder der Kräuter bis zur Reife an oder in der Nähe der Verkaufsstelle erfolgt.

3. Verfahren nach einem der Ansprüche 1 oder 2, wobei der Behälter mit einer permeablen Membran (8) verschlossen ist.

4. Verfahren nach Anspruch 3, wobei die Membran (8) für Sauerstoff (O₂) und Kohlendioxid (CO₂) durchlässig, vorzugsweise aber undurchlässig ist für Kontaminierungen und Krankheitserreger wie Viren, Bakterien, Pilze, Protisten oder Insekten.

5. Verfahren nach einem der Ansprüche 1 bis 4, wobei vor dem Kultivieren des Gemüses, der Pilze oder der Kräuter für das Gemüse oder das Kraut ein Samen (3, 5), ein aufgekeimter Samen, ein Sämling oder ein Pflänzling oder für die Pilze das Myzel auf oder in ein im Behälter (1, 5, 7) befindliches Substrat (2) gelegt wird und der Behälter verschlossen wird.

6. Verfahren nach einem der Ansprüche 1 bis 5, wobei es sich bei dem Gemüse um Blattgemüse handelt, insbesondere um Salat, insbesondere um Blattsalat, Kopfsalat oder Babyblatt-Salat, Endiviensalat, Rucola, Feldsalat, Maissalat, Mangold, Blattrüben, Spinat, Rettich, um Sprossengemüse, insbesondere um Kresse, Rübensprossen, Luzerne, Brokkolisprossen, Bohnensprossen, Fenchelsprossen, Kohlsprossen, Knoblauchsprossen, Lauchsprossen, Erbsensprossen, Kichererbsensprossen, oder wobei die Kräuter der Gruppe aus Schnittlauch, Petersilie, Basilikum, Dillkraut, Koriander, echter Koriander, Minze, Oregano, Rosmarin, Thymian, Majoran, Zitronenmelisse, zugehörig sind.

7. Verfahren nach einem der Ansprüche 1 bis 6, wobei die Samen in Form einer Samenmatte oder eines Samenbandes (6) bereitgestellt werden.

8. Verfahren nach einem der Ansprüche 1 bis 7, wobei das Substrat (2) für das Gemüse, die Pilze oder die Kräuter Nährstoffe enthält.

## Revendications

1. Procédé de production de légumes, de champignons ou d'herbes prêts à consommer, comprenant les étapes de :
a) la culture des légumes, des champignons ou des herbes dans un récipient (1, 4, 7) fermé dans des conditions de croissance appropriées jusqu'à maturité ; et
b) le transfert du récipient (1, 4, 7) avec les légumes (9), les champignons ou les herbes à maturité dans un point de vente au détail
dans lequel le récipient est pourvu d'une étiquette ou d'un emballage (13) contenant des informations concernant les légumes, les champignons ou les herbes.

2. Procédé selon la revendication 1, dans lequel la culture des légumes, des champignons ou des herbes jusqu'à maturité a lieu dans ou à proximité du point de vente au détail.

3. Procédé selon la revendication 1 ou 2, dans lequel le récipient est fermé par une membrane (8) perméable.

4. Procédé selon la revendication 3, dans lequel la membrane (8) est perméable à l'oxygène (O₂) et au dioxyde de carbone (CO₂) mais de préférence imperméable aux contaminations et aux agents pathogènes, tels que les virus, les bactéries, les mycètes, les protistes ou les insectes.

5. Procédé selon l'une quelconque des revendications 1 à 4, dans lequel, avant de cultiver les légumes, les champignons ou les herbes, une graine (3, 5), une graine germée, un semis ou une petite plante pour les légumes ou les herbes, ou du mycélium pour les champignons, est placé sur ou dans un substrat (2) dans le récipient (1, 5, 7), et le récipient est fermé.

6. Procédé selon l'une quelconque des revendications 1 à 5, dans lequel les légumes sont des légumes à feuilles, en particulier de la laitue, en particulier de la laitue à feuilles, de la laitue pommée ou de la jeune laitue à feuilles, de l'endive, de la roquette, de la mâche commune, de la salade de maïs, des blettes, de la poirée, des épinards, des radis, des pousses de légumes, en particulier, du cresson, des pousses de betteraves, de la luzerne, des pousses de brocolis, des pousses de haricots, des pousses de fenouil, des pousses de choux, des pousses d'ail, des pousses de poireaux, des pousses de pois, des pousses de pois chiches, ou dans lequel les herbes sont choisies parmi la ciboulette, le persil, le basilic, l'aneth, le persil arabe, la coriandre, la menthe, l'origan, le romarin, le thym, la marjolaine, la mélisse.

7. Procédé selon l'une quelconque des revendications 1 à 6, dans lequel les graines sont fournies sous forme d'un mat à graines ou d'une bande de graines (6).

8. Procédé selon l'une quelconque des revendications 1 à 7, dans lequel le substrat (2) comprend des nutriments pour les légumes, les champignons ou les herbes.
